# EUROPÄISCHE PATENTSCHRIFT

(11) **EP 0 554 694 B1**
(45) Veröffentlichungstag und Bekanntmachung des Hinweises auf die Patenterteilung: **03.07.1996**
(21) Anmeldenummer: 93100622.5
(22) Anmeldetag: 16.01.1993
(51) Int. Cl.: B60J 7/047, B60J 7/12

(54) **Fahrzeugdach**
Vehicle roof
Toit de véhicule

(30) Priorität: 05.02.1992 DE 4203229
(43) Veröffentlichungstag der Anmeldung: 11.08.1993
(73) Patentinhaber: WEBASTO KAROSSERIESYSTEME GmbH, D-82131 Stockdorf (DE)
(72) Erfinder: Danzl, Martin, W-8000 München 40 (DE); Mayer, Johann, W-8067 Petershausen (DE)
(74) Vertreter: Wiese, Gerhard

(56) Entgegenhaltungen:
- DE-A- 3 635 373
- DE-C- 588 549
- DE-C- 3 924 036
- DE-U- 8 806 225
- FR-A- 1 488 473
- GB-A- 1 181 875

## Beschreibung

Die Erfindung betrifft ein Fahrzeugdach entsprechend dem Oberbegriff des Patentanspruchs 1.

Ein Fahrzeugdach mit den Merkmalen des Oberbegriffs des Patentanspruchs 1 ist aus der GB-A-1 181 875 bekannt (siehe dort Fig. 13).

Das öffnungsfähige Dachteil kann dort an Führungen, die an zwei seitlichen C-Säulen gelagert sind, zur Freigabe einer Lüftungsöffnung nach hinten verfahren werden. Dabei steht die Hinterkante des öffnungsfähigen Dachteils um den Betrag nach hinten über die Heckscheibe über, um den es vorne verschoben wurde. Dies ist zum einen optisch nachteilig, zum anderen wird die Fahrtwindströmung im hinteren Teil der Dachpartie negativ beeinflußt. Dadurch, daß die C-Säulen ausschließlich durch das öffnungsfähige Dachteil verbunden sind, ist die Stabilität des von diesen Teilen gebildeten Überrollbügels durch die Festigkeit der Führungen begrenzt. Für eine vollständige Umwandlung in ein cabrioähnliches Fahrzeug wird der Deckel dort in einen separaten Stauraum im Bereich eines hinteren Kofferraumdeckels verfahren, während C-Säulen und Heckscheibe in einen davon getrennten Stauraum hinter den Sitzen verschwenkt werden. Durch das separate Verstauen sind zusätzliche Führungsmittel erforderlich und ferner wird der verfügbare Laderaum deutlich reduziert.

Fahrzeugdächer mit während der Fahrt öffnungsfähigen Dachteilen sind in zahlreichen Ausführungsformen bekannt, wie beispielsweise als Schiebedächer, Hebedächer, Schiebehebedächer, Spoilerdächer, Lamellendächer oder Faltdächer. Allen gemeinsam ist, daß sie in ein festes Fahrzeugdach eingebaut werden und somit zumindestens an drei Seiten von einem hinteren Dachteil und zwei seitlichen, Führungen aufweisenden Dachteilen umgeben sind. Diese Dächer haben den Vorteil, daß sie auch bei geöffneten Dachteilen eine hohe Stabilität aufweisen. Die Größe der erzielbaren Dachöffnungen ist jedoch begrenzt und erreicht nicht annähernd den Wert von ebenfalls bekannten Cabriodächern, bei denen ein mittels einer Mechanik nach hinten klappbares Verdeck aus flexiblem Material eine vollständige Öffnung des Daches erlaubt. Diese Cabriodächer wiederum haben den Nachteil, daß sie nur komplett geöffnet oder komplett geschlossen sind, also keine Zwischenstellungen erlauben, daß sie in der Regel nicht während der Fahrt verfahrbar sind und daß sie auch im geschlossenen Zustand insbesondere bei ungünstigen Witterungsverhältnissen nicht den Fahrkomfort und vor allem nicht die Sicherheit einer geschlossenen Limousine bieten.

Der Erfindung liegt die Aufgabe zugrunde, ein Fahrzeugdach bereitzustellen, das im geschlossenen Zustand und bei Verschiebung des öffnungsfähigen Dachteils eine hohe Stabilität aufweist und das einen geringen Stauraum beansprucht.

Diese Aufgabe wird durch die im kennzeichnenden Teil des Patentanspruchs 1 angegebenen Mittel gelöst. Die Stabilität des Daches wird entschieden verbessert, da das hintere Dachteil gemeinsam mit seitlichen tragenden Säulen (C-Säulen) einen Überrollbügel bildet. Optisch unterscheidet sich das erfindungsgemäße Dach bei einer Zwischenstellung mit geöffneten Dachteilen nicht von einem herkömmlichen Schiebedach, da das hintere Dachteil gleichzeitig eine Aufnahme für das oder die öffnungsfähigen Dachteile bildet.

Beim öffnungsfähigen Dachteil kann es sich um ein Dach mit wenigstens einem festen Deckel handeln, wie ein Schiebedach, Hebedach, Schiebehebedach oder Spoilerdach, bei dem durch verschiedene Deckelstellungen in bekannter Weise verschieden große Dachöffnungen realisierbar sind.

Vorteilhaft ist, insbesondere bei Fahrzeugen mit mehr als zwei Sitzen, eine Ausführungsform mit zwei festen Deckeln, da hierbei der einzelne Deckel kürzer wird und die beiden Deckel entsprechend leichter unter dem hinteren Dachteil und/oder im Stauraum untergebracht werden können. Bei Verwendung von festen Deckeln kann ein nur aus festen Teilen bestehendes Fahrzeugdach realisiert werden, das ohne Verwendung von flexiblem Material (Stoff) eine vollständige Dachöffnung ermöglicht.

Zum anderen ist jedoch auch die Verwendung eines Faltdaches möglich, das von sich aus schon den Vorzug einer großen Dachöffnung bei kleinem Stauvolumen des Faltverdecks mitbringt.

Ein besonders platzsparendes Verstauen des Daches wird dadurch ermöglicht, daß eine Heckscheibe am hinteren Dachteil lösbar und mittels einer getrennten Mechanik in den Stauraum versenkbar ist.

Zur Erhöhung der Stabilität ist es ferner vorteilhaft, wenn die seitlichen Dachteile an einem oberhalb der Frontscheibe verlaufenden Querträger lösbar arretiert sind. Dadurch wird bei nach hinten gefahrenen öffnungsfähigen Dachteilen aber noch in der ursprünglichen Position befindlichen seitlichen und hinterem Dachteil eine hohe Stabilität des dann stehenden Karosseriekäfigs erreicht und gleichzeitig eine komplette Entfernbarkeit der seitlichen Dachteile nach hinten ermöglicht.

Insbesondere aus optischen Gründen ist es vorteilhaft, wenn die seitlichen Dachteile nach Verfahren des öffnungsfähigen Dachteils oder der öffnungsfähigen Dachteile an das hintere Dachteil anschwenkbar sind. Sie sind damit nach Verschwenken der seitlichen Dachteile mit dem hinteren Dachteil in den Stauraum vollständig verborgen, wohingegen ein ebenfalls denkbares Anklappen an den vorderen Querholm bei vollständig geöffnetem Dach immer noch die Sicht auf die dort quer zur Fahrtrichtung anliegenden seitlichen Dachteile gewähren würde.

Der Stauraum weist vorteilhafterweise eine mittels eines Motors bewegbare Abdeckung auf, die vor Absenken der Heckscheibe in Öffnungsrichtung und nach Verschwenken des hinteren Dachteiles in den Stauraum in Schließrichtung verfahrbar ist. Damit wird bei vollständig geöffnetem Dach eine einem echten Cabrio vergleichbare Optik erzielt.

Vorteilhafterweise ist an einem oberhalb der Frontscheibe befindlichen Querträger eine ausstellbare Windabweiserlamelle angeordnet, die im eingeklappten Grundzustand dichtend am öffnungsfähigen Dachteil anliegt. Mittels einer solchen separat ausstellbaren Windabweiserlamelle kann bei noch geschlossenem öffnungsfähigen Dachteil eine erste minimale Lüftungsposition erreicht werden. Zur Verminderung der angreifenden Windkräfte ist es besonders vorteilhaft, wenn die Windabweiserlamelle zumindestens für die Dauer des Verfahrens des öffnungsfähigen Dachteiles und/oder das Verschwenken des hinteren Dachteiles in eine zweite, gegenüber der ersten Position steilere Stellung ausstellbar ist.

Eine vorteilhafte Variante zur Versenkung des kompletten Daches besteht darin, daß das hintere Dachteil gemeinsam mit den tragenden Säulen (C-Säulen) nach Absenken der Heckscheibe und nachdem das hintere Dachteil das öffnungsfähige Dachteil aufgenommen hat und die seitlichen Dachteile ebenfalls an das hintere Dachteil angeklappt sind, in den Stauraum verschwenkbar ist.

Bei einer anderen Variante wird das öffnungsfähige Dachteil nach Absenken der Heckscheibe in den Stauraum zunächst separat in denselben verfahren. Dadurch entsteht eine Zwischenstellung, bei der eine Art Überrollkäfig bestehend aus den C-Säulen, dem hinteren Dachteil und den seitlichen Dachteilen zunächst stehen bleibt und anschließend in einem weiteren Schritt separat einklappbar ist.

Nachfolgend sind drei Ausführungsbeispiele der Erfindung anhand der Zeichnungen erklärt. Es zeigt:
- Fig. 1-9: ein Zweideckeldach in mehreren Öffnungsphasen,
- Fig. 10-13: ein Eindeckeldach bei einem sportlichen zweisitzigen Fahrzeug in mehreren Bewegungsphasen und
- Fig. 14-17: eine Variante zu den Fig. 1-9, bei der die öffnungsfähigen Dachteile zunächst separat in den Stauraum verfahrbar sind.

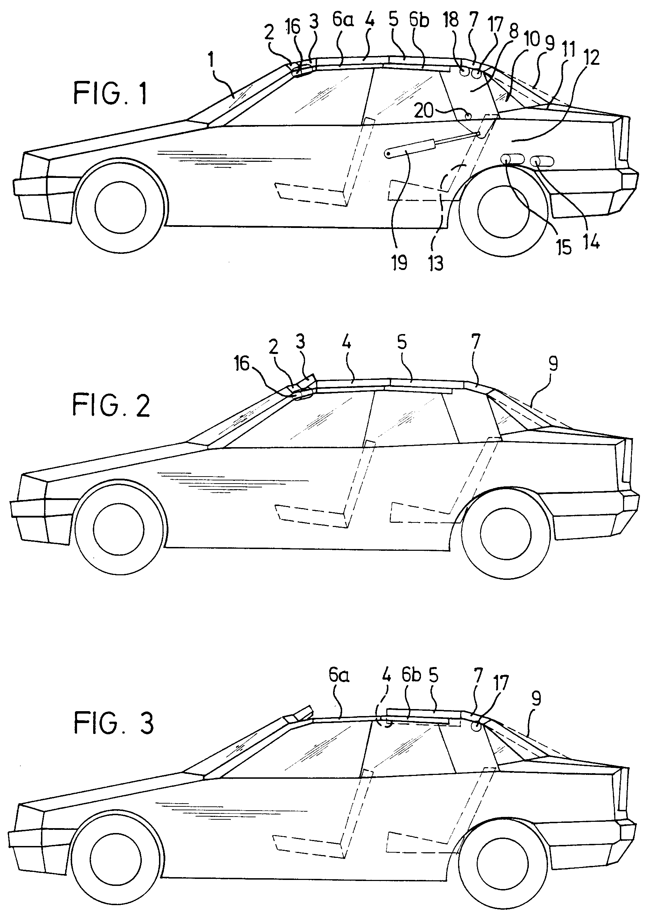

In den Fig. 1-9 ist eine mit zwei Sitzreihen ausgestattete Limousine dargestellt, deren Dachpartie sich beginnend mit der Frontscheibe 1 und einem sich oberhalb der Frontscheibe 1 erstreckenden vorderen Querträger 2 aus einer daran anschließenden und schwenkbar befestigten Windabweiserlamelle 3, einem an diese anschließenden vorderen Deckel 4, einem daran anschließenden hinteren Deckel 5 und einem hinteren Dachteil 7 zusammensetzt. Zu beiden Seiten der Deckel 4 und 5 sind seitliche Dachteile 6a, 6b angeordnet, die die Deckel in Führungsschienen führen. Die seitlichen Dachteile 6a und 6b sind am hinteren Dachteil 7 schwenkbar angelenkt und sind mit dem vorderen Querträger 2 lösbar verbunden. Das hintere Dachteil 7 ruht beidseitig auf den C-Säulen 8, die die Verbindung zum Fahrzeugunterteil herstellen. Im Ausführungsbeispiel bilden das hintere Dachteil 7 und die beiden C-Säulen 8 einen Überrollbügel.

An das hintere Dachteil schließt sich nach hinten die Heckscheibe 9 an, die mit ihrer Oberkante dichtend am hinteren Dachteil 7 anliegt.

Zwischen den C-Säulen 8, dem hinteren Dachteil 7 und der Heckscheibe 9 sind zu beiden Seiten Dreieckfenster 10 angeordnet, die an den C-Säulen nach innen klappbar gelagert sind.

Hinter einer hinteren Sitzbank 13 ist ein Stauraum 12 zur Aufnahme des kompletten Daches vorgesehen, der von einer Abdeckung 11 verdeckbar ist.
Zur Bewegung der Abdeckung 11 in Öffnungsrichtung vor dem Vorwärtsschwenken und anschließendem Absenken der Heckscheibe 9 und in Schließrichtung nach Verfahren der Deckel 4 und 5 und Verschwenken des Überrollbügels in den Stauraum 12 in Schließrichtung ist ein elektrischer Antrieb 14 im Bereich des Stauraums 12 vorgesehen.

Ein weiterer elektrischer Antrieb 15, der ebenfalls im Bereich des Stauraums 12 angeordnet ist, sorgt für ein Schwenken der Heckscheibe 9 um deren Oberkante zur C-Säule 8 hin und für das anschließende Verfahren hinter die hintere Sitzbank 13 in den Stauraum 12. Im vorderen Querträger 2 ist ein elektrischer Antrieb 16 angeordnet, der die Ausstellung der Windabweiserlamelle 3 und vorzugsweise auch die Entriegelung der seitlichen Dachteile 6a,6b vom vorderen Querträger 2 bewirkt.

Im hinteren Dachteil 7 ist ein elektrischer Antrieb 17 für das Verfahren der Deckel 4 und 5 vorgesehen und ferner ein elektrischer Antrieb 18 für die Schwenkbewegung der seitlichen Dachteile 6a, 6b. Zwei im Bereich der hinteren Fahrzeugseitenwände angeordnete Hydraulikzylinder 19 sorgen für eine Verschwenkung der C-Säulen 8 mit dem hinteren Dachteil 7 und den an dieses angeklappten seitlichen Dachteilen 6a, 6b um einen Drehpunkt 20, der etwa in Höhe der Gürtellinie des Fahrzeuges liegt.

Während das erfindungsgemäße Fahrzeugdach in Fig. 1 in vollständig geschlossenem Zustand sich nicht von einer herkömmlichen Limousine unterscheidet, zeigen die in den Fig. 2-9 dargestellten Zwischenstadien dessen allmähliche Verwandlung zu einem Fahrzeug, das einem herkömmlichen Cabriolet gleicht. Durch die Verwendung fester Deckel besteht das gesamte Dach im Unterschied zu einem Cabriolet jedoch ausschließlich aus festen Teilen; dies hat große Vorteile im Hinblick auf die Sicherheit, die Witterungsbeständigkeit und die Lebensdauer des Daches, aber auch auf die Reparaturfreundlichkeit, nachdem alle Elemente im Gegensatz zu einem durchgehenden Stoffverdeck einzeln austauschbar sind. In Fig. 2 wird zunächst mittels des Antriebs 16 die Windabweiserlamelle 3 ausgestellt. Sie gibt dabei eine erste, relativ kleine Lüftungsöffnung frei. Die Ausstellung der Windabweiserlamelle 3 erfolgt dabei vorzugsweise in eine erste Lüfterposition mit einer flacheren Neigung.
In Fig. 3 ist der vordere Deckel 4 zusätzlich zur Ausstellung der Windabweiserlamelle 3 mittels des Antriebes 17 nach hinten verfahren und liegt unter dem hinteren Deckel 5. Dadurch wird eine Dachöffnung freigegeben, die der eines herkömmlichen Schiebedaches gleicht.

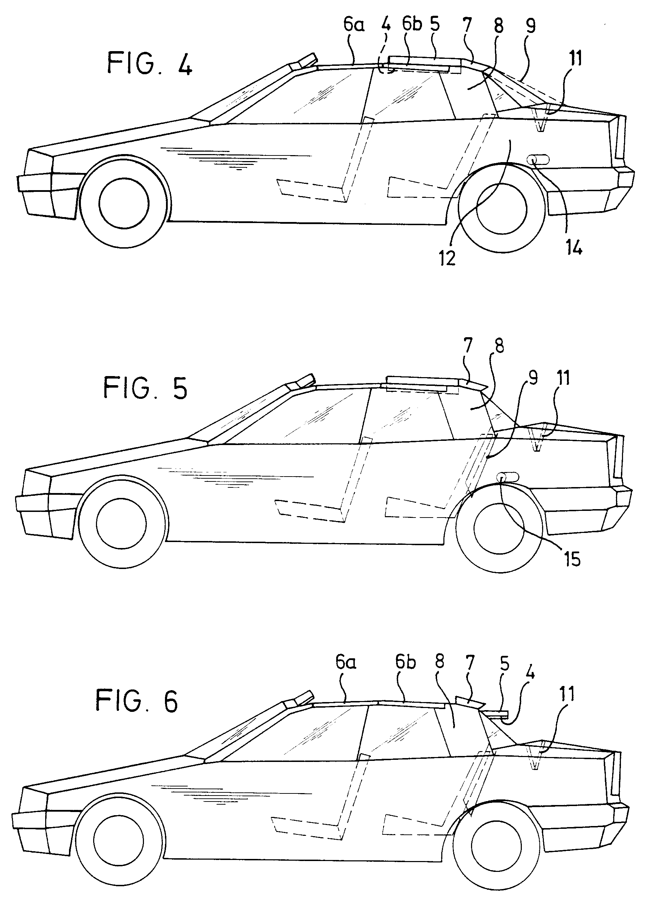

In Fig. 4 wird mittels des Antriebes 14 die Abdeckung 11 des Stauraumes 12 durch eine Faltung nach hinten geöffnet.

Um den in Fig. 5 dargestellten Zustand zu erreichen wird die Heckscheibe 9 mittels des Antriebes 15 zunächst um ihre Oberkante in Fahrtrichtung nach vorne geklappt und anschließend etwa parallel zur Lehne der hinteren Sitzbank 13 in den Stauraum 12 verfahren. Auch in diesem Zwischenstadium ist wie bei den vorangegangen und folgenden ein normaler Fahrbetrieb mit einer bereits wesentlich verbesserten Durchlüftungswirkung möglich.

In Fig. 6 sind der vordere Deckel 4 und der hintere Deckel 5 mittels des Antriebes 17 in übereinanderliegender Position unter das hinter Dachteil 7 verfahren, das zu diesem Zweck über eine entsprechende Aufnahme verfügt. Bis zu diesem Stadium bleibt ein aus den C-Säulen 8, dem hinteren Dachteil 7 und den noch mit dem vorderen Querträger 2 verbundenen seitlichen Dachteilen 6a und 6b bestehender stabiler Überrollkäfig aufrechterhalten.

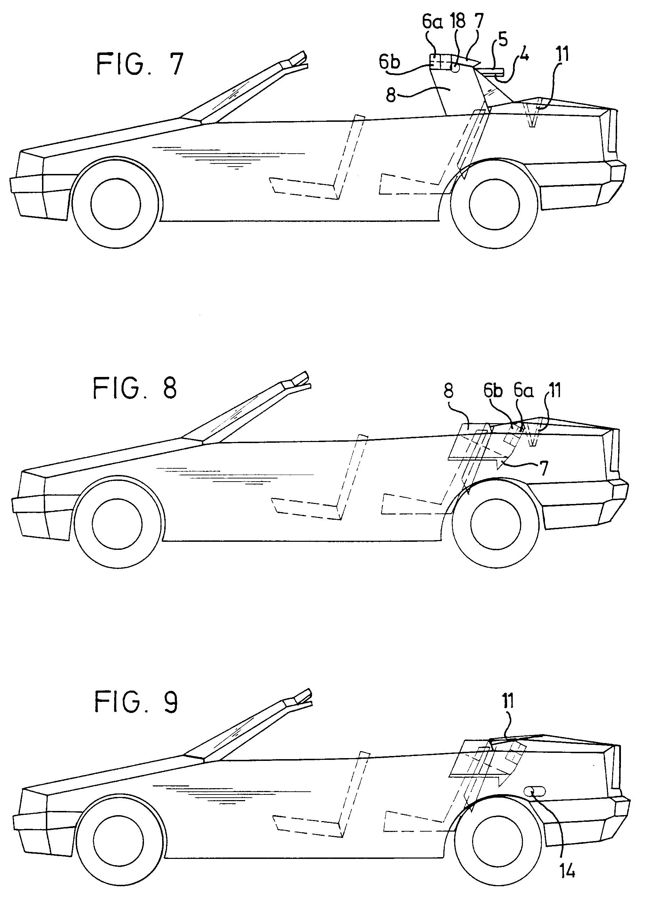

Um von der Darstellung in Fig. 6 zum Zustand in Fig. 7 zu gelangen, werden mittels des Antriebes 16 die Verbindungen zwischen vorderen Querträger 2 und den vorderen seitlichen Dachteilen 6a gelöst, anschließend das seitliche Dachteil 6a nach innen zum seitlichen Dachteil 6b geklappt und anschließend das Dachteil 6b mit dem anliegenden Dachteil 6a an das hintere Dachteil 7 angeklappt. Diese Bewegungen werden vom im Bereich des hinteren Dachteiles 7 angeordneten Antrieb 18 vorgenommen.

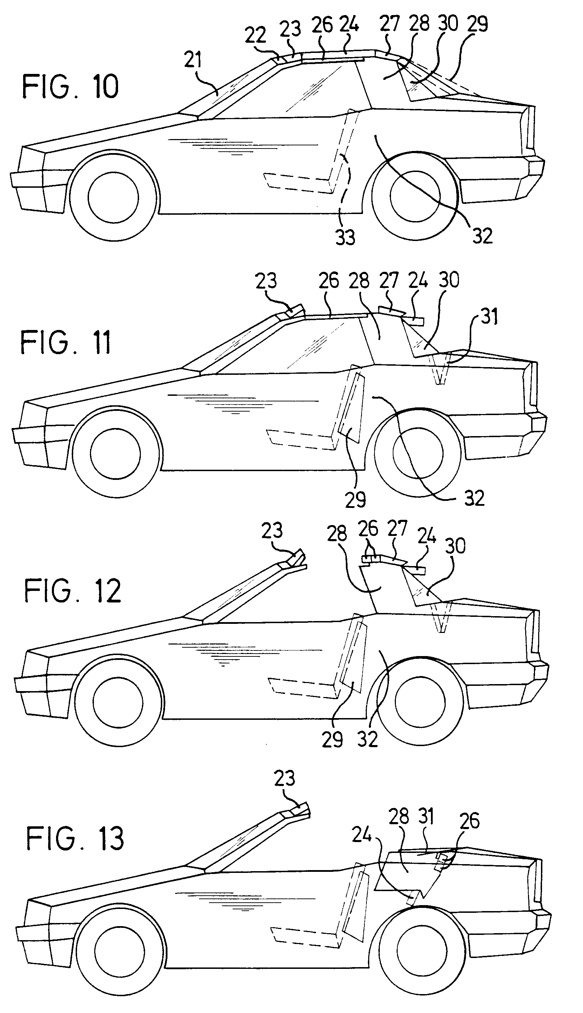

Anschließend wird mittels der in Fig. 1 dargestellten Hydraulikzylinder 19 das komplette Paket aus C-Säulen 8, hinterem Dachteil 7 und den unterhalb desselben aufgenommenen Deckeln 4 und 5 um den Drehpunkt 20 in den Stauraum 12 geschwenkt. Dieser Zustand ist in Fig. 8 dargestellt. Nach Schließen der Abdeckung 11 mittels des Antriebes 14 ist das Dach vollkommen vor Blicken geschützt im Stauraum 12 untergebracht und das Fahrzeug vermittelt dem Betrachter das Bild eines herkömmlichen Cabriolets.
Im zweiten Ausführungsbeispiel, das in den Fig. 10-13 dargestellt ist, ist ein zweisitziges sportliches Fahrzeug dargestellt, bei dem auf Grund des kürzeren Daches nur ein einziger Deckel vorgesehen ist. Die Dachpartie besteht ausgehend von der Frontscheibe 21 und einem oberhalb dieser angeordneten vorderen Querträger 22 aus einer an den vorderen Querträger 22 schwenkbar angelenkten Windabweiserlamelle 23, einem hieran anschließenden Deckel 24 und einem hinteren Dachteil 27. Der Deckel 24 wird von seitlichen Dachteilen 26 begrenzt, die am hinteren Dachteil 27 schwenkbar angelenkt sind und am vorderen Querträger 22 lösbar arretiert sind. Das hintere Dachteil 27 bildet mit den tragenden C-Säulen 28 einen Überrollbügel. Nach hinten schließt sich an das hintere Dachteil 27 eine Heckscheibe 29 an. Zwischen dieser und den C-Säulen 28 ist zu beiden Seiten ein Dreieckfenster 30 vorgesehen. Eine Abdeckung 31 (Fig. 11) gibt einen hinter dem Sitz 33 liegenden Stauraum 32 zur Aufnahme des kompletten Daches frei.

Der Bewegungsablauf ist ähnlich wie beim ersten Ausführungsbeispiel. In Fig. 10 ist das Dach vollständig geschlossen. In Fig. 11 ist in zwei voneinander unabhängigen Teilschritten mittels eines nicht dargestellten, im Bereich des vorderen Querträgers 2 liegenden Antriebes die Windabweiserlamelle 23 ausgestellt und der Deckel 24 mittels eines nicht dargestellten, im Bereich des hinteren Dachteiles 27 angeordneten Antriebes nach hinten unter das hintere Dachteil 27 verfahren. Zuvor wurde die Heckscheibe 29 von einem nicht dargestellten, im Bereich des Stauraumes 32 angeordneten Antrieb zunächst um ihre Oberkante in Richtung zu den C-Säulen 28 hin geschwenkt und anschließend etwa parallel zur Lehne des Sitzes 33 in den Stauraum 32 verfahren. In dieser Zwischenstellung ist bei sehr guter Belüftungswirkung ein geschlossener Überrollkäfig vorhanden, der von den C-Säulen 28, dem hinteren Dachteil 27 und den noch mit dem vorderen Querholm 22 im Eingriff stehenden seitlichen Dachteilen 26 gebildet wird.

In Fig. 12 ist die Windabweiserlamelle 23 in eine zweite, gegenüber der ersten in Fig. 11 gezeigten Position steilere Lage ausgestellt. Der im Bereich des vorderen Querträgers 22 angeordnete Antriebsmotor hat die Arretierung der seitlichen Dachteile 26 mit dem vorderen Querträger 22 gelöst und ein im Bereich des hinteren Dachteils 27 angeordneter, nicht dargestellter Antriebsmotor hat die seitlichen Dachteile 26 an das hintere Dachteil 27 angeschwenkt.
Die steilere Anstellung der Windabweiserlamelle 23 bewirkt während des Anklappens der seitlichen Dachteile 26 an das hintere Dachteil 27 und während des anschließenden Verschwenkens des Überrollbügels mitsamt den seitlichen Dachteilen 26 und dem Deckel 24 in den Stauraum eine Reduzierung der am hinteren Dachteil angreifenden Windkräfte. Nach Abschluß der Verschwenkbewegung des gesamten Paketes in den Stauraum wird die Windabweiserlamelle 23 vorzugsweise wieder in ihre erste Ausstellposition zurückverfahren. Vorzugsweise bleibt die Windabweiserlamelle 23 jedoch auch bei vollständig geöffnetem Dach einstellbar, um den Fahrzeuginsassen je nach deren individuellen Bedürfnissen eine Anpassung an die Windverhältnisse und die Fahrgeschwindigkeit zu ermöglichen. Ferner wird, wie in Fig. 13 dargestellt, die Abdeckung 31 mittels eines nicht dargestellten Antriebsmotors wieder geschlossen, so daß auch hier optisch der Eindruck eines Cabriolets entsteht.

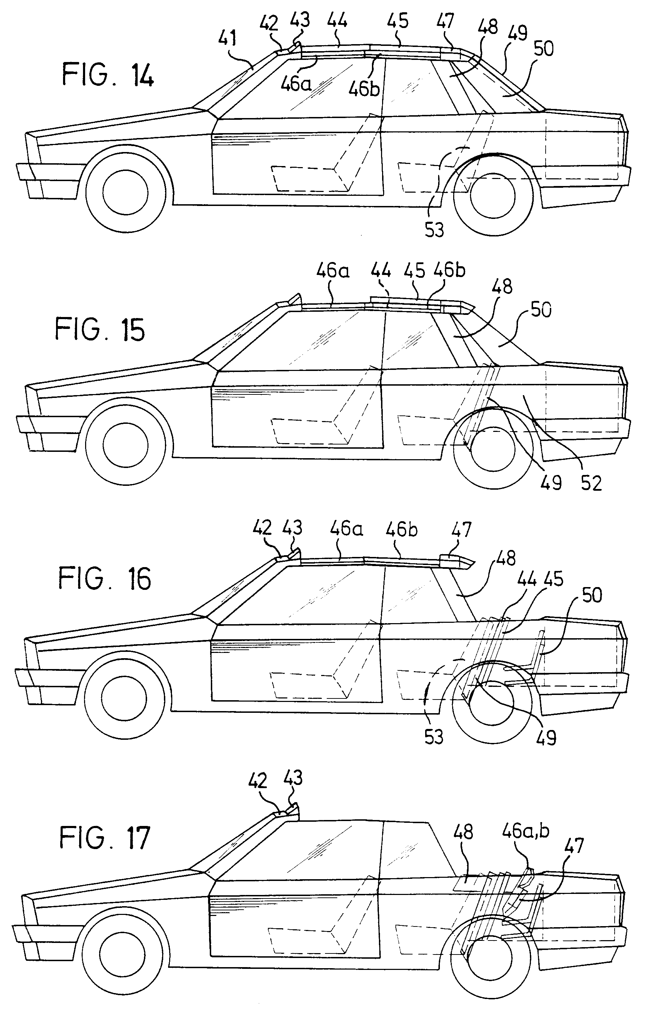

Das in den Fig. 14-17 dargestellte dritte Ausführungsbeispiel unterscheidet sich vom ersten Ausführungsbeispiel dadurch, daß die beiden öffnungsfähigen Dachteile (Deckel) zunächst separat nach Verfahren der Heckscheibe in einen Stauraum ebenfalls in den Stauraum verfahren werden und erst danach ein Verbund aus seitlichen Dachteilen, hinterem Dachteil und C-Säule aufgelöst und ebenfalls in den Stauraum eingeklappt wird. Die Bezugszahlen sind soweit möglich analog zu denen in den Fig. 1-9 gewählt und lediglich um vierzig erhöht worden. In Fig. 14 ist zunächst eine an einem oberhalb einer Frontscheibe 41 angeordneten vorderen Querträger 42 schwenkbar angelenkte Windabweiserlamelle 23 mittels eines nicht dargestellten, im Bereich des vorderen Querträgers 42 liegenden Antriebes in eine Lüftungsposition ausgestellt. Ein vorderer Deckel 44 und ein dahinter liegender Deckel 45 sind noch geschlossen und bilden mit den diese führenden seitlichen Dachteile 46a, 46b und einem hinteren Dachteil 47 eine geschlossene Dachhaut wie bei einer Limousine. Das hintere Dachteil 47 bildet mit den seitlichen das hintere Dachteil 47 tragenden C-Säulen 48 einen Überrollbügel. In Fig. 15 ist die an das hintere Dachteil 47 nach hinten anschließende Heckscheibe 49 um ihre Oberkante nach vorne geklappt und anschließend in einen Stauraum 52 hinter der hinteren Sitzbank 53 verfahren. Zusätzlich ist der vordere Deckel 44 mittels eines im Bereich des hinteren Dachteiles 47 angeordneten nicht dargestellten Antriebes in eine Position unterhalb des hinteren Deckels 45 zurückgefahren. Anschließend werden beide Deckel 44, 45 über eine an den C-Säulen 48 angeordnete nicht dargestellte Kulisse in den Stauraum 52 verfahren und zwischen der Heckscheibe 49 und den C-Säulen 48 befindliche Seitenteile 50 zusammengefaltet und in den Stauraum eingeklappt (Fig. 16). In diesem Stadium wird aus C-Säulen 48, hinterem Dachteil 47 und seitlichen Dachteilen 46a und 46b ein geschlossener Überrollkäfig gebildet, wobei alle übrigen eine Lüftungswirkung behindernden oberen und hinteren Teile des Fahrgastraumes bereits im Stauraum 52 befindlich sind.

Im nächsten Schritt wird nun mittels eines im Bereich des hinteren Dachteiles 47 angeordneten, nicht dargestellten Antriebsmotors das seitliche Dachteil 46a an das seitliche Dachteil 46b angeklappt und anschließend beide seitlichen Dachteile 46a, 46b an das hintere Dachteil 47 angeklappt. Mittels eines nicht dargestellten zu beiden Seiten angeordneten Hydraulikzylinders wird nun analog zum ersten Ausführungsbeispiel das Paket aus C-Säulen 48, hinterem Dachteil 47 und an diesen angeklappten seitlichen Dachteilen 46a, 46b in den Stauraum 52 geschwenkt.

Die vorstehend beschriebenen Varianten können wie eingangs beschrieben nicht nur mit herkömmlichen unter das hintere Dachteil verfahrbaren festen Deckeln sondern auch mit spoilerartig über das hintere Dachteil verfahrbaren Deckeln, oder herausnehmbaren Hebedächern, oder nach hinten fahrbaren faltbaren Dächern ausgestattet sein. Ferner muß das zeitweise feststehende Dachteil zur Aufnahme der öffnungsfähigen Dachteile nicht zwangsläufig ein hinteres Dachteil sein, sondern kann auch ein vorne etwa zwischen A und B-Säulen liegendes Dachteil sein, das nach hinten anschließende Deckel sowie deren seitliche Führungen aufnimmt, anschließend bis etwa in Höhe der C-Säulen nach hinten fährt und dann in den Stauraum eingeklappt wird. Bei allen Varianten bleibt der Vorteil erhalten, daß ein einziges Fahrzeug in verschiedenen Bewegungsstadien von einem geschlossenen Zustand, in dem der Fahrkomfort und die Sicherheit einer Limousine annähernd erreicht wird bis hin zu einem vollständig versenkten Cabriodach verwendbar ist.

### Bezugszeichenliste

- 1, 21, 41: Frontscheibe
- 2, 22, 42: vorderer Querträger
- 3, 23, 43: Windabweiserlamelle
- 4, 24, 44: vorderer Deckel
- 5, 45: hinterer Deckel
- 6a, 26, 46a: seitliche Dachteile (mit Führungsschienen)
- 6b, 46b: seitliche Dachteile (mit Führungsschienen)
- 7, 27, 47: hinteres Dachteil
- 8, 28, 48: C-Säule
- 9, 29, 49: Heckscheibe
- 10, 30: Dreieckfenster
- 11, 31, 51: Abdeckung
- 12, 32, 52: Stauraum
- 13, 33, 53: (hintere) Sitzbank
- 14: Antrieb für Abdeckung
- 15: Antrieb für Heckscheibe
- 16: Antrieb für Windabweiserlamelle
- 17: Antrieb für vorderen und hinteren Deckel
- 18: Antrieb für seitliche Dachteile
- 19: Hydraulikzylinder
- 20: Drehpunkt für C-Säule
- 50: Seitenteil

## Patentansprüche

1. Fahrzeugdach mit wenigstens einem während der Fahrt öffnungsfähigen Dachteil (4,5; 24; 44,45), das an seitlichen Führungen in Fahrzeuglängsrichtung in wenigstens eine Öffnungsposition verfahrbar ist und das zur Freigabe einer cabrioartigen Dachöffnung in einen Stauraum (12; 32; 52) im hinteren Teil des Fahrzeuges verfahrbar ist, **dadurch gekennzeichnet**, daß die seitlichen Führungen an seitlichen Dachteilen (6a,6b; 26; 46a, 46b) angeordnet sind, die an einem hinter dem öffnungsfähigen Dachteil (4,5; 24; 44,45) angeordneten, zeitweise feststehenden Dachteil (7; 27; 47) befestigt sind, welches bei geschlossenem Dach gemeinsam mit den seitlichen Dachteilen (6a, 6b; 26; 44, 45) das öffnungsfähige Dachteil (4,5; 24; 44,45) umgibt, eine Aufnahme für das öffnungsfähige Dachteil (4,5; 24; 44,45) bildet und gemeinsam mit diesem und den seitlichen Dachteilen (6a,6b; 26; 46a,46b) in den Stauraum (12; 3; 52) verfahrbar ist.

2. Fahrzeugdach nach Anspruch 1, **dadurch gekennzeichnet**, daß das öffnungsfähige Dachteil ein Schiebehebedach mit einem Deckel (24) ist.

3. Fahrzeugdach nach Anspruch 1, **dadurch gekennzeichnet**, daß das öffnungsfähige Dachteil ein Spoilerdach mit einem Deckel ist.

4. Fahrzeugdach nach Anspruch 1, **dadurch gekennzeichnet**, daß das öffnungsfähige Dachteil ein zwei Deckel (4, 5; 44, 45) umfassendes Schiebedach ist.

5. Fahrzeugdach nach Anspruch 1, **dadurch gekennzeichnet**, daß das öffnungsfähige Dachteil ein Faltdach ist.

6. Fahrzeugdach nach einem der vorhergehenden Patentansprüche, **dadurch gekennzeichnet**, das am hinteren Dachteil (7; 27; 47) eine Heckscheibe (9; 29; 49) lösbar angeordnet ist.

7. Fahrzeugdach nach Anspruch 6, **dadurch gekennzeichnet**, das die Heckscheibe (9; 29; 49) mittels einer getrennten Mechanik in den Stauraum (12; 32; 52) versenkbar ist.

8. Fahrzeugdach nach einem der vorhergehenden Patentansprüche, **dadurch gekennzeichnet**, daß die seitlichen Dachteile (6a, 6b; 26; 46a, 46b) an einem oberhalb der Frontscheibe (1; 21; 41) verlaufenden Querträger (2; 22; 42) lösbar arretiert sind.

9. Fahrzeugdach nach einem der vorhergehenden Patentansprüche, **dadurch gekennzeichnet**, daß die seitlichen Dachteile (6a, 6b; 26; 46a, 46b) nach Verfahren des öffnungsfähigen Dachteils (4, 5; 24; 44, 45) an das hintere Dachteil (7; 27; 47) anschwenkbar sind.

10. Fahrzeugdach nach einem der vorhergehenden Patentansprüche, **dadurch gekennzeichnet**, daß der Stauraum (12; 32; 52) eine bewegbare Abdeckung (11; 31; 51) aufweist, die von einem Stellmotor (14) vor Absenken der Heckscheibe (9; 29; 49) in Öffnungsrichtung und nach Verschwenken des hinteren Dachteils (7; 27; 47) in den Stauraum (12; 32; 52) in Schließstellung verfahrbar ist.

11. Fahrzeugdach nach einem der vorhergehenden Patentansprüche, **dadurch gekennzeichnet**, daß an einem oberhalb der Frontscheibe (1; 21; 41) befindlichen Querträger (2; 22; 42) eine ausstellbare Windabweiserlamelle (3; 23; 43) angeordnet ist, die im eingeklappten Zustand dichtend am öffnungsfähigen Dachteil (4; 24; 44) anliegt.

12. Fahrzeugdach nach Anspruch 11, **dadurch gekennzeichnet**, daß die Windabweiserlamelle (3; 23; 43) zur Erzeugung eines Lüftungsspaltes bei geschlossenem öffnungsfähigen Dachteil (4, 5; 24; 44, 45) in eine erste Stellung ausstellbar ist.

13. Fahrzeugdach nach Anspruch 11 oder 12, **dadurch gekennzeichnet**, daß die Windabweiserlamelle (3; 23; 43) zumindest für die Dauer des Verfahrens des öffnungsfähigen Dachteils (4, 5; 24; 44, 45) und des Verschwenkens des hinteren Dachteils (7; 27; 47) in eine zweite, gegenüber der ersten steilere Stellung ausstellbar ist.

14. Fahrzeugdach nach einem der vorhergehenden Patentansprüche, **dadurch gekennzeichnet**, daß zwischen den C-Säulen (8; 28; 48) und der Heckscheibe (9; 29; 49) an die C-Säulen anklappbare Dreieckfenster (10; 30; 50) angeordnet sind.

15. Fahrzeugdach nach einem der vorhergehenden Patentansprüche, **dadurch gekennzeichnet**, daß das hintere Dachteil (7; 27) nach Aufnahme des öffnungsfähigen Dachteils (4, 5; 24) gemeinsam mit den tragenden Säulen (C-Säulen 8; 28) nach Absenken der Heckscheibe (9; 29) in den Stauraum (12; 32; 52) verschwenkbar ist.

## Claims

1. A vehicle roof having at least one roof part (4,5;24; 44,45) adapted for movement in the longitudinal direction of the vehicle on lateral guides into at least one open position and which, in order to expose a cabriolet type of roof opening, can be moved into a stowage space (12,32,52) in the rear part of the vehicle, characterised in that the lateral guides are disposed on lateral roof parts (6a,6b, 26,46a,48b) which are fixed to a roof part (4,5;24;44,45) disposed behind the openable roof part (4,5;24;44,45) which at times is stationary and which, when the roof is closed and together with the lateral roof parts (6a,6b,26;44,45), surrounds the openable roof part (4,5;24;44,45), forms a housing for the openable roof part (4,5;24;44,45) and is adapted to be moved jointly with the latter and with the lateral roof parts (6a,6b;26;46a,46b) into the stowage space (12;3;52).

2. A vehicle roof according to Claim 1, characterised in that the openable roof part is a sliding-raising roof with a cover (24).

3. A vehicle roof according to Claim 1, characterised in that the openable roof part is a spoiler roof with a cover.

4. A vehicle roof according to Claim 1, characterised in that the openable roof is a sliding roof comprising two covers (4,5; 44,45).

5. A vehicle roof according to Claim 1, characterised in that the openable roof part is a folding roof.

6. A vehicle roof according to one of the preceding Patent Claims, characterised in that a rear windscreen (9;29,49) is separably disposed on the rear roof part (7;27;47).

7. A vehicle roof according to Claim 6, characterised in that the rear windscreen (9;29;49) can be lowered into the stowage space (12;32;52) by means of a separate mechanism.

8. A vehicle roof according to one of the preceding Patent Claims, characterised in that the lateral roof parts (6a,6b; 26; 46a,46b) are separably locked on a cross-member (2;22;42) which extends above the front windscreen (1;21;41).

9. A vehicle roof according to one of the preceding Patent Claims, characterised in that after the roof part (4,5; 24; 44,45) which can be opened has completed its travel, the lateral roof parts (6a,6b; 26; 46a,46b) can be pivoted onto the rear roof part (7;27;47).

10. A vehicle roof according to one of the preceding Patent Claims, characterised in that the stowage space (12;32;52) comprises a movable covering (11;31;51) which, prior to lowering of the rear windscreen (9;29;49) in the opening direction and after pivoting of the rear roof part (7;27;47) into the stowage space (12;32;52), can be moved into the position of closure by a servomotor (14).

11. A vehicle roof according to one of the preceding Patent Claims, characterised in that there is on a cross-member (2;22;42) above the front windscreen (1;21;41) a push-out wind deflector strip (3;23;43) which, in the folded-in state, bears in sealing-tight manner on the openable roof part (4;24;44).

12. A vehicle roof according to Claim 11, characterised in that the wind deflector strip (3;23;43) can be pushed out into a first position in order to create a ventilation gap when the openable roof part (4,5; 24; 44,45) is closed.

13. A vehicle roof according to Claim 11 or 12, characterised in that the wind deflector strip (3;23;43) can be pushed out into a second position which is steeper than the first for at least the duration of the movement of the openable roof part (4,5; 24; 44,45) and the pivoting of the rear roof part (7;27;47).

14. A vehicle roof according to one of the preceding Patent Claims, characterised in that between the C-pillars (8;28;48) and the rear windscreen (9;29;49) there are triangular windows (10;30;50) which are hinged to fold against the C-pillars.

15. A vehicle roof according to one of the preceding Patent Claims, characterised in that after it has received the openable roof part (4,5; 24) the rear roof part (7;27), together with the supporting pillars (C-pillars 8;28) can be pivoted into the stowage space (12;32;52) after the rear windscreen (9;29) has been lowered.

## Revendications

1. Toit de véhicule avec au moins une partie du toit (4, 5 ; 24 ; 44, 45) que l'on peut ouvrir pendant la marche et que l'on peut mettre dans au moins une position d'ouverture dans le sens longitudinal du véhicule sur des guides latéraux, et que l'on peut mettre dans un espace de rangement (12 ; 32 ; 52) à la partie arrière du véhicule pour libérer une ouverture dans le toit de type cabriolet, toit de véhicule caractérisé en ce que les guides latéraux sont prévus sur les côtés du toit (6a, 6b ; 26 ; 46a, 46b) qui sont fixés à une partie de toit (6 ; 27 ; 47) de temps à autre fixe, prévue derrière la partie de toit (4, 5 ; 24 ; 44, 45) que l'on peut ouvrir, et qui lorsque le toit est fermé, entoure en commun avec les parties latérales de toit (6a, 6b ; 26 ; 44, 45), la partie de toit (4, 5, 24 ; 44, 45) que l'on peut ouvrir, et forme un logement pour la partie de toit (4, 5 ; 24 ; 44, 45) que l'on peut ouvrir, en pouvant être conduit en commun avec cette partie et les parties latérales de toit (6a, 6b ; 26 ; 46a, 46b) dans l'espace de rangement (12, 3, 52).

2. Toit de véhicule selon la revendication 1, caractérisé en ce que la partie du toit qui est susceptible de s'ouvrir est un toit coulissant que l'on soulève et que l'on tire avec un couvercle (24).

3. Toit de véhicule selon la revendication 1, caractérisé en ce que la partie du toit qui est susceptible de s'ouvrir est un toit becquet avec un couvercle.

4. Toit de véhicule selon la revendication 1, caractérisé en ce que la partie du toit qui est susceptible de s'ouvrir est un toit coulissant qui comprend deux couvercles (4, 5 ; 44, 45).

5. Toit de véhicule selon la revendication 1, caractérisé en ce que la partie du toit qui est susceptible de s'ouvrir est un toit pliant.

6. Toit de véhicule, selon l'une des revendications précédentes, caractérisé en ce que l'on dispose sur la partie arrière du toit (7 ; 27 ; 47) une vitre arrière (9 ; 29 ; 49) de façon amovible.

7. Toit de véhicule selon la revendication 6, caractérisé en ce que l'on peut abaisser la vitre arrière (9 ; 29 ; 49) au moyen d'un mécanisme séparé, dans l'espace de rangement (12 ; 32 ; 52).

8. Toit de véhicule, selon l'une des revendications précédentes, caractérisé en ce que les parties latérales du toit (6a, 6b ; 26 ; 46a, 46b) sont fixées de façon amovible sur un support transversal (2 ; 22 ; 42) qui s'étend au-dessus du pare-brise (1 ; 21 ; 41).

9. Toit de véhicule, selon l'une des revendications précédentes, caractérisé en ce que les parties latérales du toit (6a, 6b ; 26 ; 46a, 46b) peuvent être montées de façon à pivoter sur la partie arrière du toit ( 7 ; 27 ; 47) après le déplacement de la partie du toit qui peut s'ouvrir (4, 5 ; 24 ; 44, 45).

10. Toit de véhicule, selon l'une des revendications précédentes, caractérisé en ce que l'espace de rangement (12 ; 32 ; 52) présente un couvercle mobile (11 ; 31 ; 51) qui peut être manoeuvré par un servomoteur (14) avant l'abaissement de la vitre arrière (9 ; 29 ; 49) dans le sens de l'ouverture et peut être amené en position de fermeture après le pivotement de la partie arrière du toit (7 ; 27 ; 47) dans l'espace de rangement (12 ; 32 ; 52).

11. Toit de véhicule selon l'une des revendications précédentes, caractérisé en ce que sur un support transversal (2 ; 22 ; 42) qui se trouve au-dessus du pare-brise (1 ; 21 ; 41) on dispose une lamelle déflectrice du vent (3 ; 23 ; 43), que l'on peut déployer, et qui repose à l'état replié de façon étanche sur la partie du toit qui peut s'ouvrir (4 ; 24 ; 44).

12. Toit de véhicule selon la revendication 11, caractérisé en ce que la lamelle déflectrice du vent (3 ; 23 ; 43) peut être déployée dans une première position pour produire une fente d'aération quand la partie du toit qui peut s'ouvrir (4, 5 ; 24 ; 44, 45) est fermée.

13. Toit de véhicule selon la revendication 11 ou 12, caractérisé en ce que la lamelle déflectrice du vent (3 ; 23 ; 43) peut être mise dans une seconde position, plus abrupte que la première, au moins pour la durée du déplacement de la partie du toit qui peut s'ouvrir (4, 5 ; 24 ; 44, 45) et du pivotement de la partie arrière du toit (7 ; 27 ; 47).

14. Toit de véhicule selon l'une des revendications précédentes, caractérisé en ce qu'entre les colonnes C (8 ; 28 ; 48) et la vitre arrière (9 ; 29 ; 49) sont disposées des fenêtres triangulaires (10 ; 30 ; 50) qui peuvent se replier sur les colonnes C.

15. Toit de véhicule selon l'une des revendications précédentes, caractérisé en ce que l'on peut faire pivoter dans l'espace de rangement (12 ; 32 ; 52) la partie arrière du toit (7 ; 27) après avoir recueilli la partie du toit qui peut s'ouvrir (4, 5 ; 24) en même temps que les colonnes supports (colonnes C 8 ; 28) après avoir baissé la vitre arrière (9 ; 29).
